# EUROPEAN PATENT APPLICATION

(11) **EP 4 664 798 A1**
(43) Date of publication of application: **17.12.2025**
(21) Application number: 24752816.9
(22) Date of filing: 04.02.2024
(51) Int. Cl.: H04B 17/391

(54) **INFORMATION PROCESSING METHOD AND APPARATUS, TERMINAL, AND NETWORK SIDE DEVICE**

(30) Priority: 10.02.2023 CN 202310098669
(71) Applicant: Vivo Mobile Communication Co., Ltd., Dongguan, Guangdong 523863 (CN)
(72) Inventor: REN, Qianyao, Dongguan, Guangdong 523863 (CN); WU, Hao, Dongguan, Guangdong 523863 (CN)
(74) Representative: Shieldmark
(86) International application number: PCT/CN2024/075664
(87) International publication number: WO 2024/164961

(57) **Abstract**

This application relates to the field of communication technologies, and discloses an information processing method and apparatus, a terminal, and a network side device. The information processing method according to embodiments of this application includes: expanding, by a terminal, first channel information into second channel information, where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers; and processing, by the terminal, the second channel information into channel feature information, and reporting the channel feature information.

## Description

### CROSS-REFERENCE TO RELATED APPLICATIONS

This application claims priority to Chinese Patent Application No. 202310098669.8 filed in China on February 10, 2023, which is incorporated herein by reference in its entirety.

### TECHNICAL FIELD

This application belongs to the field of communication technologies, and in particular, to an information processing method and apparatus, a terminal, and a network side device.

### BACKGROUND

With the development of science and technology, people have begun to study the application of artificial intelligence (Artificial Intelligence, AI) networks in a communication system. For example, communication data may be transmitted between a network side device and a terminal through an AI network model. Compression of channel state information (Channel State Information, CSI) based on an AI model is divided into an encoding model and a decoding model. In general, the encoding model is located on a terminal side, and the decoding model is located on a base station side. Generally, after the AI model completes training, a length of input data thereof is fixed. However, in actual use, it cannot be ensured that the length of input data each time matches a data length used during the training of the AI model. This may easily affect performance of the AI model.

### SUMMARY

Embodiments of this application provide an information processing method and apparatus, a terminal, and a network side device, to resolve a problem in the related art that a length of input data of an AI model cannot be guaranteed.

According to a first aspect, an information processing method is provided, including:

A terminal expands first channel information into second channel information, where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

The terminal processes the second channel information into channel feature information, and reports the channel feature information.

According to a second aspect, an information processing method is provided, including:

A network side device receives channel feature information reported by a terminal.

The network side device processes the channel feature information into second channel information, and processes the second channel information into first channel information,
where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

According to a third aspect, an information processing apparatus is provided, including:
an expansion module, configured to expand first channel information into second channel information, where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers; and
a reporting module, configured to process the second channel information into channel feature information, and report the channel feature information.

According to a fourth aspect, an information processing apparatus is provided, including:
a receiving module, configured to receive channel feature information reported by a terminal; and
a processing module, configured to process the channel feature information into second channel information, and process the second channel information into first channel information,
where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

According to a fifth aspect, a terminal is provided. The terminal includes a processor and a memory. The memory stores a program or an instruction executable in the processor. The program or the instruction, when executed by the processor, implements the steps of the method according to the first aspect.

According to a sixth aspect, a terminal is provided, including a processor and a communication interface. The processor is configured to expand first channel information into second channel information, and process the second channel information into channel feature information. The first channel information includes M1 sub-bands or N1 ports corresponding to each sub-band, and the second channel information includes M2 sub-bands or N2 ports corresponding to each sub-band, where M1 ≤ M2, N1 ≤ N2, and M1, M2, N1, and N2 are all positive integers. The communication interface is configured to report the channel feature information.

According to a seventh aspect, a network side device is provided. The network side device includes a processor and a memory. The memory stores a program or an instruction executable in the processor. The program or the instruction, when executed by the processor, implements the steps of the method according to the second aspect.

According to an eighth aspect, a network side device is provided, including a processor and a communication interface. The communication interface is configured to receive channel feature information reported by a terminal. The processor is configured to process the channel feature information into second channel information and process the second channel information into first channel information. The first channel information includes M1 sub-bands or N1 ports corresponding to each sub-band, and the second channel information includes M2 sub-bands or N2 ports corresponding to each sub-band, where M1 ≤ M2, N1 ≤ N2, and M1, M2, N1, and N2 are all positive integers.

According to a ninth aspect, a communication system is provided, including a terminal and a network side device. The terminal may be configured to perform the steps of the information processing method according to the first aspect, and the network side device may be configured to perform the steps of the information processing method according to the second aspect.

According to a tenth aspect, a readable storage medium is provided. The readable storage medium stores a program or an instruction. The program or the instruction, when executed by a processor, implements the steps of the method according to the first aspect, or implements the steps of the method according to the second aspect.

According to an eleventh aspect, a chip is provided. The chip includes a processor and a communication interface. The communication interface is coupled to the processor. The processor is configured to run a program or an instruction to implement the method according to the first aspect or implement the method according to the second aspect.

According to a twelfth aspect, a computer program/program product is provided. The computer program/program product is stored in a storage medium. The computer program/program product is executed by at least one processor to implement the method according to the first aspect, or to implement the method according to the second aspect.

In embodiments of this application, a terminal can expand first channel information into second channel information, so that even for first channel information of different lengths, the terminal may expand the first channel information into second channel information of a fixed length, to enable the length of the second channel information to match a length of an input of an AI model. In this way, the AI model that matches channel information of different lengths does not need to be trained for the channel information of different lengths, and a terminal or a network side device may only need to train an AI model that matches the length of the second channel information, thereby effectively saving storage and training overheads of the terminal and/or the network side device for the AI model.

### BRIEF DESCRIPTION OF THE DRAWINGS

FIG. 1 is a block diagram of a wireless communication system to which an embodiment of this application may be applied;
FIG. 2 is a flowchart of an information processing method according to an embodiment of this application;
FIG. 3 is a flowchart of another information processing method according to an embodiment of this application;
FIG. 4 is a structural diagram of an information processing apparatus according to an embodiment of this application;
FIG. 5 is a structural diagram of another information processing apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network side device according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used to distinguish between similar objects, and are not used to describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of connected objects, and a character "/" generally indicates an "or" relationship between associated objects. The term "or" in the specification and the claims indicates at least one of connected objects. For example, "A or B" covers three schemes, that is, Scheme I: including A but not including B; Scheme II: including B but not including A; and Scheme III: including both A and B.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" in embodiments of this application are usually interchangeably used, and the described technology may be applied to both the system and the radio technology mentioned above, or may be applied to another system and radio technology. A new radio (New Radio, NR) system is described below as an example, and the term NR is used in most of the following description. Nevertheless, the technologies may be applied to applications other than applications of the NR system, such as a 6^{th} Generation (6^{th} Generation, 6G) communication system.

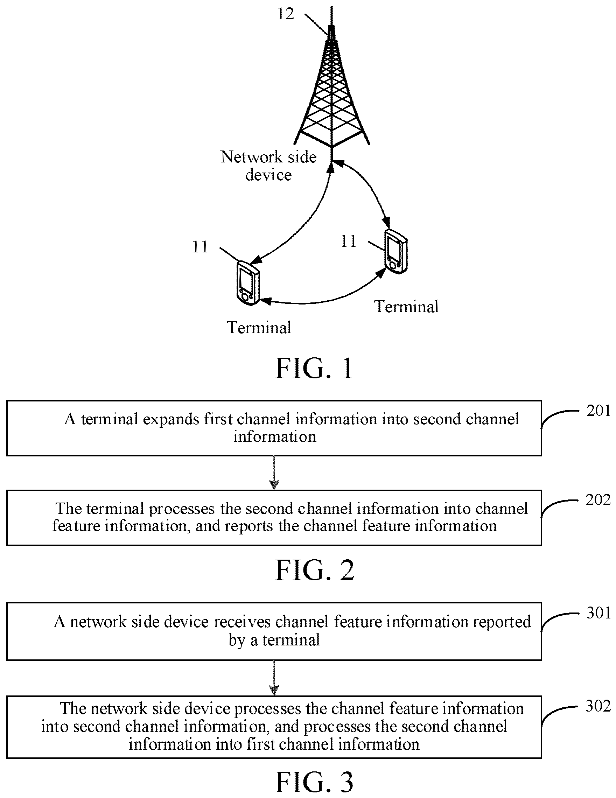

FIG. 1 is a block diagram showing a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) which is also referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment device (Vehicle User Equipment, VUE), a pedestrian terminal (Pedestrian User Equipment, PUE), a smart home (a home device with a wireless communication function, such as a refrigerator, a television, a washing machine, or a furniture), a game console, a personal computer (personal computer, PC), a teller machine, or a self-service machine. The wearable device includes a smartwatch, a smart wristband, a smart headset, smart glasses, smart jewelry (a smart bangle, a smart bracelet, a smart ring, a smart necklace, a smart anklet, a smart leglet, and the like), a smart wristband, smart clothing, and the like. It should be noted that a specific type of the terminal 11 is not limited in embodiments of this application. The network side device 12 may include an access network device or a core network device. The access network device may also be referred to as a wireless access network device, a radio access network (Radio Access Network, RAN), a wireless access network function, or a wireless access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a household NodeB, a household evolved NodeB, a transmitting receiving point (Transmitting Receiving Point, TRP), or another appropriate term in the art. The base station is not limited to a specific technical term, as long as the same technical effect can be achieved. It should be noted that in this embodiment of this application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, and a specific type of the core network device is not limited.

To better understand the technical solution provided in embodiments of this application, related concepts and principles that may be involved in embodiments of this application are described below.

It may be learned from the information theory that accurate channel state information (Channel State Information, CSI) is crucial to channel capacity. Especially for a multi-antenna system, a sending terminal may optimize sending of a signal based on the CSI to cause the signal to better match a channel state. For example, a channel quality indicator (Channel Quality Indicator, CQI) may be used for selecting a suitable modulation and coding scheme (Modulation and Coding Scheme, MCS) to realize link adaptation. A precoding matrix indicator (Precoding Matrix Indicator, PMI) may be used for implementing feature beamforming (eigen beamforming) to maximize strength of a received signal, or used for suppressing interference (such as inter-cell interference or interference among a plurality of users). Therefore, since proposal of a multi-input multi-output (multi-input multi-output, MIMO) technology, CSI obtaining has always been a research hotspot.

Generally, the base station sends a channel state information reference signal (Channel State Information Reference Signal, CSI-RS) on some time-frequency resources of a certain slot (slot). The terminal performs channel estimation based on the CSI-RS, calculates channel information on the slot (slot), and feeds back the PMI to the base station through a codebook. The base station combines the channel information based on the codebook information fed back by the terminal, and the base station performs data precoding and multiuser scheduling accordingly before the next CSI reporting.

To further reduce CSI feedback overheads, the terminal may change reporting PMI by each sub-band to reporting PMI based on a delay (delay). Since the channels in the delay domain are more concentrated, the PMI of all sub-bands may be approximately represented through a PMI with less delay, that is, delay domain information is compressed before being reported.

Similarly, to reduce the overhead, the base station may precode the CSI-RS in advance, and send the encoded CSI-RS to the terminal. The terminal obtains a channel corresponding to the encoded CSI-RS, and the terminal only needs to select several ports with relatively strong strength from ports indicated by a network side and report coefficients corresponding to these ports.

Further, to better compress channel information, the terminal and the network side device may use a neural network or a machine learning method to transmit channel information.

Specifically, compressed encoding is performed on the channel information at the terminal through an AI model, and compressed content is decoded at the base station through a corresponding AI model, thereby recovering the channel information. In this case, the AI model for decoding on the base station side and the AI model for encoding on the terminal side need to be trained jointly to achieve a reasonable degree of matching. An input of the AI model for encoding is channel information, and an output is encoded information, that is, channel feature information. The input of the AI model for decoding is the encoded information, and the output is the recovered channel information.

Generally, a length of the input of the AI model is fixed and matches the data used during training. A larger length of the input cannot be applied because the AI model does not know how to process input data of this length. Training of the AI model requires a large quantity of data iterations, and a new model cannot be quickly trained based on the length of the input in a new configuration. Moreover, if a model is trained in advance for each length of the input, excessive model storage overheads may be caused, which is impractical. In view of the foregoing problems, embodiments of this application provide an information processing method.

The information processing method provided in embodiments of this application is described in detail below through some embodiments and application scenarios thereof with reference to the accompanying drawings.

Refer to FIG. 2. FIG. 2 is a flowchart of an information processing method according to an embodiment of this application. The method is applied to a terminal. As shown in FIG. 2, the method includes the following steps.

Step 201: A terminal expands first channel information into second channel information.

The first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

It may be understood that the terminal expands the first channel information into the second channel information. In other words, the terminal expands or supplements information content of the first channel information to obtain second channel information with greater information content.

For example, the first channel information includes M1 sub-bands, and the terminal may only expand the sub-bands, that is, expanding the M1 sub-bands into M2 sub-bands. The terminal may add fixed elements at locations respectively before and after the M1 sub-bands, or may add fixed elements at the location only before or after the M1 sub-bands, or may add fixed elements at some certain locations in the M1 sub-bands, to obtain the M2 sub-bands through expansion. In this case, the first channel information may include M1 sub-bands and N1 ports corresponding to each sub-band, and the second channel information may include M2 sub-bands and N2 ports corresponding to each sub-band, where M1 < M2, and N1 = N2.

Alternatively, the first channel information includes M1 sub-bands and N1 ports corresponding to each sub-band, and the terminal may only expand the ports. For example, for the N1 ports, based on polarization directions, a certain quantity of fixed elements may be added to locations in each polarization direction without elements, so as to obtain the N2 ports through expansion. In this case, the second channel information includes M2 sub-bands and N2 ports corresponding to each sub-band, where M1 = M2, and N1 < N2.

Alternatively, the first channel information includes M1 sub-bands and N1 ports corresponding to each sub-band, and the terminal may expand both the sub-bands and the ports, to expand the M1 sub-bands into M2 sub-bands and expand the N1 ports corresponding to each sub-band into corresponding N2 ports. In this case, the second channel information includes M2 sub-bands and N2 ports corresponding to each sub-band, where M1 < M2, and N1 < N2.

Step 202: The terminal processes the second channel information into channel feature information, and reports the channel feature information.

It may be understood that the terminal processes the second channel information into channel feature information after expanding the first channel information into the second channel information, and reports the channel feature information. For example, the terminal may input the second channel information into an AI encoding model, compress and encode the second channel information into channel feature information through the AI encoding model, and output the channel feature information. The terminal reports the channel feature information to a network side device. The network side device may include an AI decoding model corresponding to the AI encoding model, and then the network side device can restore the channel feature information to the second channel information based on the AI decoding model.

It should be noted that the second channel information is channel information used for inputting the AI encoding model. A quantity of sub-bands included in the second channel information and a quantity of ports corresponding to each sub-band may be specific values. In other words, M2 and N2 may be preset fixed values. Therefore, the length of the second channel information inputted into the AI encoding model is fixed, thereby ensuring that the length of the second channel information can match the length of the input of the AI encoding model.

In embodiments of this application, a terminal can expand first channel information into second channel information, so that even for first channel information of different lengths, the terminal can expand the first channel information into second channel information of a fixed length, to enable the length of the second channel information to match the AI model (or referred to as an AI unit, an AI structure, or the like). In this way, the AI model that matches channel information of different lengths does not need to be trained for the channel information of different lengths, and a terminal or a network side device may only need to train an AI model that matches the length of the second channel information, thereby effectively saving storage and training overheads of the terminal and/or the network side device for the AI model.

Optionally, the terminal may store or train a plurality of AI models (AI encoding models), and different AI models may correspond to second channel information of different lengths.

Optionally, the second channel information includes any one of the following:
a precoding matrix;
a channel matrix;
a preprocessed precoding matrix; and
a preprocessed channel matrix.

The preprocessing may be projection processing, for example, orthogonal projection processing.

Optionally, when the first channel information includes M1 sub-bands and N1 ports corresponding to each sub-band, step 201 includes:
The terminal obtains M1 sub-bands and N1 ports corresponding to each sub-band, and determines M2 sub-bands and N2 ports corresponding to each sub-band.

The terminal determines a to-be-expanded sub-band location based on the M1 sub-bands and the M2 sub-bands, and determines a to-be-expanded port location based on the N1 ports and the N2 ports.

The terminal adds a target element at each of the to-be-expanded sub-band location and the to-be-expanded port location, to obtain the second channel information of the M2 sub-bands and the N2 ports corresponding to each sub-band.

For example, the terminal determines, based on the first channel information, that M1 sub-bands and N1 ports corresponding to each sub-band are included. If the length of the second channel information is preset, for example, when the terminal determines which AI encoding model needs to be used, the length of the input corresponding to the AI encoding model is obtained, that is, the length of the second channel information. In this way, the terminal can determine the M2 sub-bands corresponding to the second channel information and N2 ports corresponding to each sub-band. Further, the terminal determines to-be-expanded sub-band locations based on the M1 sub-bands and the M2 sub-bands, that is, (M2-M1) to-be-expanded sub-band locations, and determines to-be-expanded port locations based on the N1 ports and the N2 ports, that is, (N2-N1) to-be-expanded port locations. The terminal then adds target elements at these to-be-expanded sub-band locations and to-be-expanded port locations, thereby achieving expansion of the M1 sub-bands and the N1 ports corresponding to each sub-band, to obtain the second channel information of the M2 sub-bands and the N2 ports corresponding to each sub-band. In this way, even if the length of the first channel information does not satisfy the length of the input required by the AI encoding model, second channel information that matches the length of the input required by the AI encoding model is obtained by expanding the first channel information, thereby effectively improving applicability of the AI encoding model.

Alternatively, the target element includes at least one of the following:
a specific element; and
an element calculated based on an existing element, where the existing element is an element on each of the M1 sub-bands or the N1 ports.

For example, the target element includes a specific element. The specific element may be a pre-agreed fixed value, such as 0. Alternatively, the target element may also be calculated based on an existing element on the M1 sub-bands or the N1 ports. For example, sub-band expansion is used as an example. A difference between two adjacent sub-bands may be used as a target element at the to-be-expanded sub-band location between the two adjacent sub-bands. Alternatively, an extrapolated value of channel information of two adjacent sub-bands may be used as the target element of a sub-band next to each of the two sub-bands. Optionally, the target element may further be calculated in another calculation manner. This is not enumerated in detail in this embodiment.

Optionally, the to-be-expanded port location is a port location determined based on polarization, or a port location selected by the terminal. For example, 32 ports are actually dual-polarized, 16 ports in each polarization direction. If 8 ports need to be expanded into 32 ports, 4 ports may be expanded into 16 ports in each polarization direction. To be specific, port numbers of the corresponding 8 ports among the 32 ports after expansion are 0, 1, 2, 3, 16, 17, 18, 19, instead of 0, 1, 2, 3, 4, 5, 6, 7, 8.

If data (inputted data) used by the trained AI model is 32 ports, and an arrangement of 16 ports in each polarization direction is 2*8, that is, 2 rows and 8 columns, and the network side device is actually configured with 8 ports. The arrangement of the 4 ports in each polarization direction is 1*4, that is, 1 row and 4 columns. During the expansion, the 4 ports in each polarization direction may be mapped to continuous 4 port locations in the same row of the 16 ports corresponding to the same polarization direction, thereby achieving expansion to 32 ports.

Alternatively, the to-be-expanded port locations may also be selected and determined by the terminal, so that the expansion of the port location is more flexible.

Optionally, the to-be-expanded sub-band location is a sub-band location determined based on a subcarrier spacing (Subcarrier Spacing, SCS) and a quantity of physical resource blocks (Physical Resource Block, PRB) of each sub-band, or a sub-band location selected by the terminal.

For example, due to a different spacing between sub-bands in a different scenario, during expansion of the sub-band, a location consistent with the sub-band spacing of data A (that is, the first channel information) may be selected as expanded data B (that is, the second channel information). For example, if a sub-band length of an input corresponding to the AI encoding model is 20 sub-bands, and a sub-band spacing between the 20 sub-bands is 4 PRBs at an SCS of 15 KHz. If the data A (that is, the first channel information) is 10 sub-bands with a spacing of 4 PRBs at an SCS of 30 KHz, one-to-every-other correspondence may be formed. To be specific, a sub-band 0 of the data A corresponds to a sub-band 0 of the data B, a sub-band 1 of the data A corresponds to a sub-band 2 of the data B, a sub-band 2 of the data A corresponds to a sub-band 4 of the data B, and so on. The remaining sub-band locations of the data B are each filled with zero to obtain channel information that satisfies an input requirement of the AI encoding model. For example, assuming that the data A has 9 sub-bands and the data B has 13 sub-bands, the 9 sub-bands of the expanded data A may correspond to middle 9 sub-bands of the data B. In other words, first two sub-bands and last two sub-bands of the 9 sub-bands are filled with 0, thereby achieving sub-band expansion.

Alternatively, the to-be-expanded sub-band location may also be selected and determined by the terminal. For example, the terminal may perform traversal and search to find an optimal expansion location to perform expansion, so that the expansion of the sub-band location is more flexible.

Optionally, in embodiments of this application, the method further includes:
The terminal reports first location information, where the first location information includes at least one of information about the to-be-expanded sub-band location and information about the to-be-expanded port location.

For example, if the terminal expands the sub-band, the terminal reports the to-be-expanded sub-band location to the network side device, that is, an expanded sub-band location. Alternatively, if the terminal performs expansion on ports, the terminal reports the to-be-expanded port location to the network side device, that is, an expanded port location. In this way, after the network side device recovers the second channel information based on the AI decoding model, the first channel information may be recovered based on the second channel information and the expanded sub-band location and/or the expanded port location, thereby ensuring the accuracy of channel information transmission between the terminal and the network side device.

Optionally, that the terminal reports the first channel information includes any one of the following:
The terminal reports at least one of a first bitmap and a second bitmap, where the first bitmap is used for indicating the to-be-expanded sub-band location, and the second bitmap is used for indicating the to-be-expanded port location.

The terminal reports a third bitmap, where the third bitmap is a two-dimensional bitmap, and the third bitmap is used for indicating at least one of the to-be-expanded sub-band location and the to-be-expanded port location.

For example, if the terminal only expands the sub-band, only the first bitmap may be reported; if the terminal only expands the port, only the second bitmap may be reported; and if the terminal expands both the sub-band and the port, the first bitmap and the second bitmap are reported. Optionally, in the first bitmap and the second bitmap, a numerical value 1 may be used for representing a sub-band and/or a port already in the first channel information, and an expanded sub-band and/or port in the second channel information is represented through the numerical value 0. In this way, the network side device can accurately obtain, based on the first bitmap and/or the second bitmap, the sub-band location and/or the port location expanded by the terminal, to quickly and accurately recover the first channel information, thereby ensuring the accuracy of the first channel information.

Alternatively, the terminal may also report a two-dimensional third bitmap, and then may simultaneously indicate at least one of the to-be-expanded sub-band location and the to-be-expanded port location through one bitmap. Optionally, in the third bitmap, a sub-band and/or a port existing in the first channel information may be represented through the numerical value 1, and the expanded sub-band and/or port in the second channel information may be represented through the numerical value 0, so that the network side device can accurately learn the sub-band location and/or the port location expanded by the terminal, thereby recovering the first channel information quickly and accurately.

Optionally, when the terminal reports the second bitmap, the second bitmap is used for indicating a location of a target port, and the target port is a port of a same polarization direction among to-be-expanded ports. In other words, since the ports are dual-polarized, the terminal may report only the to-be-expanded port location in one polarization direction, and the network side device can obtain an actual port location in a dual-polarization direction based on the reported content. In this way, reporting overheads of the terminal can be effectively saved, and it can also be ensured that the network side device can obtain an accurate to-be-expanded port location.

It should be noted that when no sub-band and port are being expanded, that is, M1 = M2 and N1 = N2, the terminal does not need to report a bitmap.

Alternatively, if the terminal expands the sub-band and/or the port through a default expansion location, for example, filled with zero at each last location, in this case, the terminal may not report a bitmap either, and the network side device may recover the first channel information based on the default expansion location. The default expansion locations may be specified in a protocol, or may be pre-agreed between the network side device and the terminal.

Optionally, before the terminal expands the first channel information into the second channel information, the method further includes:
The terminal receives first indication information sent by a network side device, where the first indication information is used for indicating at least one of the to-be-expanded sub-band location and the to-be-expanded port location.

In other words, the to-be-expanded sub-band location and/or the to-be-expanded port location may be indicated by the network side device, and the terminal performs sub-band expansion and/or port expansion based on the indication of the network side device. In this case, the terminal does not need to report the expanded sub-band location and/or the expanded port location, so that the overheads of the terminal can be effectively saved.

It should be noted that after receiving the first indication information, the terminal may perform the expansion based on the to-be-expanded sub-band location and/or to-be-expanded port location indicated in the first indication information during each expansion.

Optionally, that the terminal receives the first indication information sent by the network side device includes:
The terminal receives a CSI report configuration sent by the network side device, where the CSI report configuration includes the first indication information.

It should be noted that the network side device may periodically send the CSI report configuration. The first indication information in the CSI report configuration sent each time may be the same or may be different. The terminal may perform the expansion based on the to-be-expanded sub-band location and/or to-be-expanded port location indicated in the first indication information received most recently.

Optionally, the first indication information is further used for indicating at least one of the following:
a bitmap, used for indicating at least one of the to-be-expanded sub-band location and the to-be-expanded port location;
an index, associated with at least one of the to-be-expanded sub-band location and the to-be-expanded port location; and
a target parameter, used for indicating at least one of the to-be-expanded sub-band location and the to-be-expanded port location.

For example, the first indication information is further used for indicating a bitmap, and then the terminal can perform expansion based on the to-be-expanded sub-band location and/or to-be-expanded port location indicated in the bitmap, thereby implementing sub-band and/or port expansion based on the location required by the network side device. In this case, the terminal does not need to report the first bitmap, the second bitmap, or the third bitmap, thereby saving the overheads of the terminal.

Alternatively, the first indication information may further indicate an index, and the terminal may perform expansion based on the to-be-expanded sub-band location and/or to-be-expanded port location associated with the index. In this case, the terminal does not need to report the expanded sub-band location and/or the expanded port location either.

Optionally, an association relationship between the index and at least one of the to-be-expanded sub-band location and the to-be-expanded port location is specified in a protocol.

Optionally, an association relationship between the index and at least one of the to-be-expanded sub-band location and the to-be-expanded port location corresponds to an AI unit (also referred to as an AI model). For example, different AI units may correspond to an association relationship between a different index and the to-be-expanded sub-band location, or different AI units may correspond to different to-be-expanded sub-band locations.

Optionally, the association relationship is transmitted together with the corresponding AI unit.

Optionally, when the first indication information is used for indicating one of the to-be-expanded sub-band location and the to-be-expanded port location, the terminal reports the other of the to-be-expanded sub-band location and the to-be-expanded port location. For example, if the first indication information sent by the network side device only indicates the to-be-expanded sub-band location, and the terminal performs expansion on the sub-band and the port, the terminal reports the to-be-expanded port location, thereby ensuring that the network side device can learn which port locations are expanded by the terminal, to ensure that the network side device can recover the first channel information.

Optionally, in embodiments of this application, the second channel information is a plurality of coefficients, or the second channel information includes a real part and an imaginary part.

In embodiments of this application, that the terminal expands the first channel information into the second channel information includes at least one of the following:
The terminal determines, based on a protocol agreement, a to-be-expanded port location for each polarization direction of the N1 ports according to the polarization direction, and adds a target element at the to-be-expanded port location to expand the N1 ports into the N2 ports.

The terminal determines to-be-expanded sub-band locations respectively before and after the M1 sub-bands based on the protocol agreement, and adds the target element at each of the to-be-expanded sub-band locations to expand the M1 sub-bands into the M2 sub-bands.

Optionally, in embodiments of this application, a sub-band and/or a port may further be expanded based on an expansion method specified in the protocol.

For example, the terminal determines, according to the expansion method specified in the protocol, a to-be-expanded port location for each polarization direction of the N1 ports according to the polarization direction, and then adds a target element (such as 0) at the determined to-be-expanded port location, to obtain N2 ports through expansion. For example, for ports 1111, the ports are expanded into 11001100 according to the polarization direction, that is, four ports are divided into two polarization directions, with two to-be-expanded port locations in each direction, and finally expanded into eight ports.

For sub-bands, the terminal may also perform expansion respectively before and after M1 sub-bands based on the expansion method specified in the protocol, to obtain M2 sub-bands through expansion, or may supplement a target element (such as 0) at the to-be-expanded sub-band location. For example, the M2 sub-bands obtained through expansion are [0 0 M1 0 0].

It should be noted that when the terminal expands the sub-band and/or the port according to the method specified in the protocol, the terminal may not need to report the to-be-expanded sub-band location and/or the to-be-expanded port location to the network side device. The network side device may recover the second channel information to obtain the first channel information based on the expansion method specified in the protocol.

To facilitate better understanding, the technical solution of this application is illustrated below through a specific embodiment.

### Embodiment I:

Assuming that an input to a target AI model is 20 sub-bands, each sub-band is equipped with 32 ports, and CSI compression actually configured in a terminal is 13 sub-bands and 8 ports, then the sub-bands and the ports of the terminal need to be expanded.

Specifically, the terminal may respectively represent an expanded sub-band and port through two bitmaps. One of the bitmaps (bitmap) has a length of 20, indicating locations of the 13 sub-bands in the 20 sub-bands, for example, [1 0 1 1 0 1 0 1 1 0 1 0 1 1 0 1 1 0 1 1], where 0 represents the expanded sub-band location. The other bitmap has a length of 32, indicating locations of 8 ports in the 32 ports, or has a length of 16, indicating locations of 4 ports in the 16 ports (the other has the same polarization). If the 4 ports are located in the first 4 locations, the bitmap may be omitted. In this case, the terminal needs to report or indicate whether the ports are first 8 of the 32 ports or first 4 of two sets of 16 ports. Alternatively, the expanded location is directly specified in the protocol. The terminal compresses the expanded port and sub-band through the target AI model to obtain and report outputted channel feature information.

After the network side device receives the channel feature information, channel information of 20 sub-bands is recovered through the AI decoding model, that is, channel information of 32 ports in each sub-band. Then a sub-band corresponding to 1 is selected based on a bitmap of the sub-band, and the remaining sub-bands are discarded. In each sub-band, coefficients of the first 8 ports or coefficients of first 4 and 16-19 ports are selected as final result, so that the actual channel information of the terminal can be restored.

Refer to FIG. 3. FIG. 3 is a flowchart of another information processing method according to an embodiment of this application. The method is applied to a network side device. As shown in FIG. 3, the method includes the following steps.

Step 301: A network side device receives channel feature information reported by a terminal.

Step 302: The network side device processes the channel feature information into second channel information, and processes the second channel information into first channel information,
where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

Optionally, the second channel information is any one of the following:
a precoding matrix;
a channel matrix;
a preprocessed precoding matrix; and
a preprocessed channel matrix.

Optionally, the method further includes:
The network side device receives first location information reported by the terminal, where the first location information includes at least one of information about the to-be-expanded sub-band location and information about the to-be-expanded port location,
where the information about the to-be-expanded sub-band location is used for indicating the to-be-expanded sub-band location determined by the terminal based on the M1 sub-bands and the M2 sub-bands, and the information about the to-be-expanded port location is used for indicating the to-be-expanded port location determined by the terminal based on the N1 ports and the N2 ports.

Optionally, that the network side device receives the first location information reported by the terminal includes any one of the following:
The network side device receives at least one of a first bitmap and a second bitmap reported by the terminal, where the first bitmap is used for indicating the to-be-expanded sub-band location, and the second bitmap is used for indicating the to-be-expanded port location.

The network side device receives a third bitmap reported by the terminal, where the third bitmap is a two-dimensional bitmap, and the third bitmap is used for indicating at least one of the to-be-expanded sub-band location and the to-be-expanded port location.

Optionally, when the terminal reports the second bitmap, the second bitmap is used for indicating a location of a target port, and the target port is a port of a same polarization direction among to-be-expanded ports.

Optionally, the method further includes:
The network side device sends first indication information to the terminal, where the first indication information is used for indicating at least one of the to-be-expanded sub-band location and the to-be-expanded port location.

Optionally, that the network side device sends the first indication information to the terminal includes:
The network side device sends a CSI report configuration to the terminal, where the CSI report configuration includes the first indication information.

Optionally, the first indication information is further used for indicating at least one of the following:
a bitmap, used for indicating at least one of the to-be-expanded sub-band location and the to-be-expanded port location;
an index, associated with at least one of the to-be-expanded sub-band location and the to-be-expanded port location; and
a target parameter, used for indicating at least one of the to-be-expanded sub-band location and the to-be-expanded port location.

Optionally, the second channel information is a plurality of coefficients, or the second channel information includes a real part and an imaginary part.

In embodiments of this application, after receiving the channel feature information reported by the terminal, the network side device may process the channel feature information into second channel information through an AI decoding model, and may process the second channel information into first channel information based on a protocol agreement, or first indication information, or the first location information reported by the terminal, thereby ensuring accuracy of channel information transmitted between the terminal and the network side device.

It should be noted that the information processing method provided in embodiments of this application is applied to the network side device, which corresponds to the foregoing information processing method applied to the terminal side. For the relevant concepts and detailed process involved in embodiments of this application, reference may be made to the descriptions of the foregoing method embodiment on the terminal side. To avoid repetition, details are not described in embodiments of this application.

The information processing method provided in embodiments of this application may be performed by an information processing apparatus. In embodiments of this application, the information processing apparatus provided in embodiments of this application is described by using an example in which the information processing apparatus performs the information processing method.

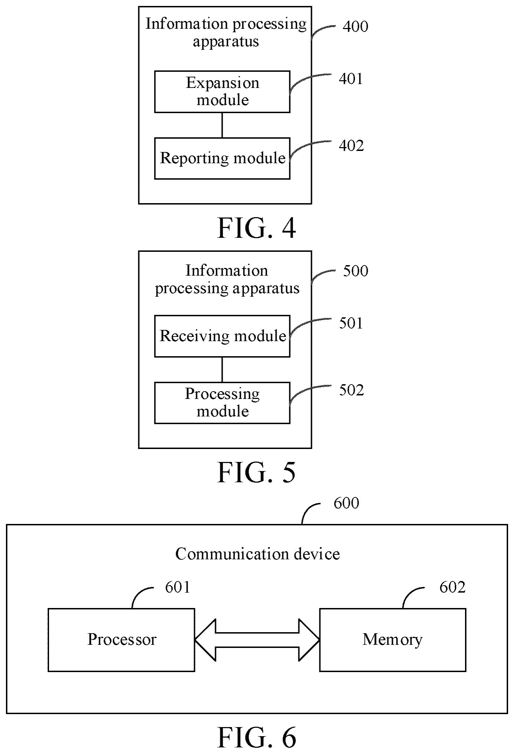

Refer to FIG. 4. FIG. 4 is a structural diagram of an information processing apparatus according to an embodiment of this application. As shown in FIG. 4, the information processing apparatus 400 includes:
an expansion module 401, configured to expand first channel information into second channel information, where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers; and
a reporting module 402, configured to process the second channel information into channel feature information, and report the channel feature information.

Optionally, the second channel information is any one of the following:
a precoding matrix;
a channel matrix;
a preprocessed precoding matrix; and
a preprocessed channel matrix.

Optionally, when the first channel information includes M1 sub-bands and N1 ports corresponding to each sub-band, the expansion module 401 is further configured to:
obtain M1 sub-bands and N1 ports corresponding to each sub-band, and determine M2 sub-bands and N2 ports corresponding to each sub-band;
determine a to-be-expanded sub-band location based on the M1 sub-bands and the M2 sub-bands, and determine a to-be-expanded port location based on the N1 ports and the N2 ports; and
add a target element at each of the to-be-expanded sub-band location and the to-be-expanded port location, to obtain the second channel information of the M2 sub-bands and the N2 ports corresponding to each sub-band.

Alternatively, the target element includes at least one of the following:
a specific element; and
an element calculated based on an existing element, where the existing element is an element on each of the M1 sub-bands or the N1 ports.

Optionally, the to-be-expanded port location is a port location determined based on polarization, or a port location selected by the terminal.

Optionally, the to-be-expanded sub-band location is a sub-band location determined based on a subcarrier spacing SCS and a quantity of physical resource blocks PRBs of each sub-band, or a sub-band location selected by the terminal.

Optionally, the reporting module 402 is further configured to:
report first location information, where the first location information includes at least one of information about the to-be-expanded sub-band location and information about the to-be-expanded port location.

Optionally, the reporting module 402 is further configured to perform any one of the following:
reporting at least one of a first bitmap and a second bitmap, where the first bitmap is used for indicating the to-be-expanded sub-band location, and the second bitmap is used for indicating the to-be-expanded port location; and
reporting a third bitmap, where the third bitmap is a two-dimensional bitmap, and the third bitmap is used for indicating at least one of the to-be-expanded sub-band location and the to-be-expanded port location.

Optionally, when the second bitmap is reported, the second bitmap is used for indicating a location of a target port, and the target port is a port of a same polarization direction among to-be-expanded ports.

Optionally, the apparatus further includes:
a receiving module, configured to receive first indication information sent by a network side device, where the first indication information is used for indicating at least one of the to-be-expanded sub-band location and the to-be-expanded port location.

Optionally, the receiving module is further configured to:
receive a CSI report configuration sent by the network side device, where the CSI report configuration includes the first indication information.

Optionally, the first indication information is further used for indicating at least one of the following:
a bitmap, used for indicating at least one of the to-be-expanded sub-band location and the to-be-expanded port location;
an index, associated with at least one of the to-be-expanded sub-band location and the to-be-expanded port location; and
a target parameter, used for indicating at least one of the to-be-expanded sub-band location and the to-be-expanded port location.

Optionally, an association relationship between the index and at least one of the to-be-expanded sub-band location and the to-be-expanded port location is specified in a protocol.

Optionally, an association relationship between the index and at least one of the to-be-expanded sub-band location and the to-be-expanded port location corresponds to an AI unit.

Optionally, the association relationship is transmitted together with the corresponding AI unit.

Optionally, when the first indication information is used for indicating one of the to-be-expanded sub-band location and the to-be-expanded port location, the apparatus reports the other of the to-be-expanded sub-band location and the to-be-expanded port location.

Optionally, the expansion module 401 is further configured to perform any one of the following:
determining, based on a protocol agreement, a to-be-expanded port location for each polarization direction of the N1 ports according to the polarization direction, and adding a target element at the to-be-expanded port location to expand the N1 ports into the N2 ports; and
determining to-be-expanded sub-band locations respectively before and after the M1 sub-bands based on the protocol agreement, and adding the target element at each of the to-be-expanded sub-band locations to expand the M1 sub-bands into the M2 sub-bands.

Optionally, the second channel information is a plurality of coefficients, or the second channel information includes a real part and an imaginary part.

In embodiments of this application, first channel information is expanded into second channel information, and then the first channel information of different lengths may be expanded into second channel information of a fixed length, so that the length of the second channel information can match a length of the input of an AI encoding model. In this way, the AI encoding model that matches channel information of different lengths does not need to be trained for the channel information, thereby effectively saving storage and training overheads of the AI model.

The information processing apparatus 400 in embodiments of this application may be an electronic device, for example, an electronic device having an operating system, or a component in an electronic device, such as an integrated circuit or a chip. The electronic device may be a terminal, or may be another device other than the terminal. For example, the terminal may include but is not limited to the above listed type of the terminal 11, and the another device may be a server, a network attached storage (Network Attached Storage, NAS), or the like. This is not specifically limited in embodiments of this application.

The information processing apparatus 400 provided in this embodiment of this application can implement each process implemented through the method embodiment of FIG. 2, and achieve the same technical effect. To avoid repetition, details are not described herein again.

Refer to FIG. 5. FIG. 5 is a structural diagram of another information processing apparatus according to an embodiment of this application. As shown in FIG. 5, the information processing apparatus 500 includes:
a receiving module 501, configured to receive channel feature information reported by a terminal; and
a processing module 502, configured to process the channel feature information into second channel information, and process the second channel information into first channel information,
where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

Optionally, the second channel information is any one of the following:
a precoding matrix;
a channel matrix;
a preprocessed precoding matrix; and
a preprocessed channel matrix.

Optionally, the receiving module 501 is further configured to:
receive first location information reported by the terminal, where the first location information includes at least one of information about the to-be-expanded sub-band location and information about the to-be-expanded port location,
where the information about the to-be-expanded sub-band location is used for indicating the to-be-expanded sub-band location determined by the terminal based on the M1 sub-bands and the M2 sub-bands, and the information about the to-be-expanded port location is used for indicating the to-be-expanded port location determined by the terminal based on the N1 ports and the N2 ports.

Optionally, the receiving module 501 is further configured to perform any one of the following:
receiving at least one of a first bitmap and a second bitmap reported by the terminal, where the first bitmap is used for indicating the to-be-expanded sub-band location, and the second bitmap is used for indicating the to-be-expanded port location; and
receiving a third bitmap reported by the terminal, where the third bitmap is a two-dimensional bitmap, and the third bitmap is used for indicating at least one of the to-be-expanded sub-band location and the to-be-expanded port location.

Optionally, when the terminal reports the second bitmap, the second bitmap is used for indicating a location of a target port, and the target port is a port of a same polarization direction among to-be-expanded ports.

Optionally, the apparatus further includes:
a sending module, configured to send first indication information to the terminal, where the first indication information is used for indicating at least one of the to-be-expanded sub-band location and the to-be-expanded port location.

Optionally, the sending module is further configured to:
send a CSI report configuration to the terminal, where the CSI report configuration includes the first indication information.

Optionally, the first indication information is further used for indicating at least one of the following:
a bitmap, used for indicating at least one of the to-be-expanded sub-band location and the to-be-expanded port location;
an index, associated with at least one of the to-be-expanded sub-band location and the to-be-expanded port location; and
a target parameter, used for indicating at least one of the to-be-expanded sub-band location and the to-be-expanded port location.

Optionally, the second channel information is a plurality of coefficients, or the second channel information includes a real part and an imaginary part.

The information processing apparatus 500 provided in this embodiment of this application can implement each process implemented through the method embodiment of FIG. 3, and achieve the same technical effect. To avoid repetition, details are not described herein again.

Optionally, as shown in FIG. 6, an embodiment of this application further provides a communication device 600, including a processor 601 and a memory 602. The memory 602 stores a program or an instruction executable in the processor 601. For example, when the communication device 600 is a terminal, the program or the instruction, when executed by the processor 601, implements the steps in the foregoing embodiments of the information processing method, and can achieve the same technical effect. When the communication device 600 is a network side device, the program or the instruction, when executed by the processor 601, implements the steps in the foregoing embodiments of the information processing method, and can achieve the same technical effect. To avoid repetition, details are not described herein again.

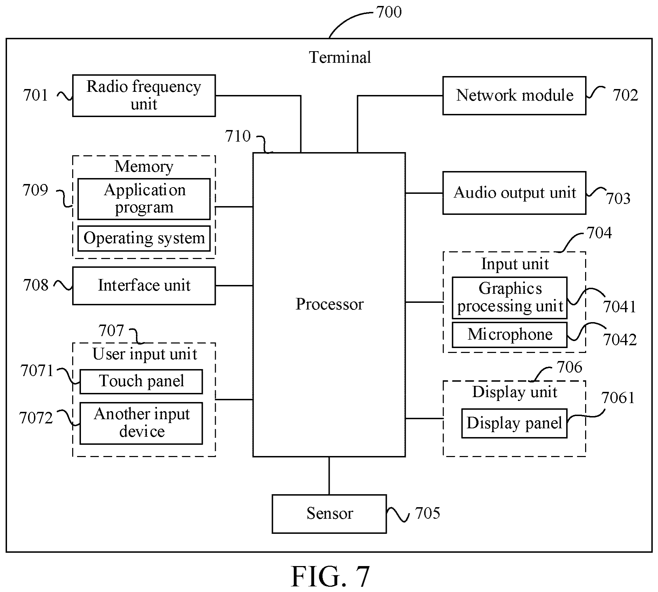

An embodiment of this application further provides a terminal, including a processor and a communication interface. The processor is configured to expand first channel information into second channel information, and process the second channel information into channel feature information. The first channel information includes M1 sub-bands or N1 ports corresponding to each sub-band, and the second channel information includes M2 sub-bands or N2 ports corresponding to each sub-band, where M1 ≤ M2, N1 ≤ N2, and M1, M2, N1, and N2 are all positive integers. The communication interface is configured to report the channel feature information. The terminal embodiment corresponds to the foregoing method embodiment of the terminal side. The implementation processes and implementations of the foregoing method embodiment are all applicable to the terminal embodiment, and can achieve the same technical effect. Specifically, FIG. 7 is a schematic diagram of a hardware structure of a terminal for implementing an embodiment of this application.

A terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) that supplies power to various components. The power supply may be logically connected to the processor 710 through a power management system, thereby realizing functions such as charging, discharging, and power consumption management through the power management system. The terminal structure shown in FIG. 7 constitutes no limitation on the terminal, and the terminal may include more or fewer components than those shown in the figure, or some merged components, or different component arrangements. Details are not described herein again.

It should be noted that, in embodiments of this application, the input unit 704 may include a graphics processing unit (Graphics Processing Unit, GPU) 7041 and a microphone 7042. The graphics processing unit 7041 processes image data of a static picture or a video obtained by an image capture apparatus (such as a camera) in a video capture mode or an image capture mode. The display unit 706 may include a display panel 7061. The display panel 7061 may be configured in a form such as a liquid crystal display or an organic light-emitting diode. The user input unit 707 includes at least one of a touch panel 7071 and another input device 7072. The touch panel 7071 is also referred to as a touch screen. The touch panel 7071 may include two parts: a touch detection apparatus and a touch controller. The another input device 7072 may include but is not limited to a physical keyboard, a function button (such as a volume control button or a power button), a trackball, a mouse, and a joystick. Details are not described herein again.

In this embodiment of this application, the radio frequency unit 701 receives downlink data from a network side device and may provide the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or an instruction and various data. The memory 709 may mainly include a first storage area for storing a program or an instruction and a second storage area for storing data. The first storage area may store an operating system, an application or an instruction required for at least one function (such as a sound playback function and an image playback function), and the like. In addition, the memory 709 may include a volatile memory or a non-volatile memory, or the memory 709 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in embodiments of this application includes but is not limited to these and any other suitable types of memories.

The processor 710 may include one or more processing units. Optionally, an application processor and a modem processor is integrated into the processor 710. The application processor mainly processes operations related to an operating system, a user interface, an application program, and the like. The modem processor mainly processes a wireless communication signal, such as a baseband processor. It may be understood that the foregoing modem processor may alternatively not be integrated into the processor 710.

The processor 710 is configured to:
expand first channel information into second channel information, where the first channel information includes M1 sub-bands or N1 ports corresponding to each sub-band, the second channel information includes M2 sub-bands or N2 ports corresponding to each sub-band, M1 ≤ M2, N1 ≤ N2, and M1, M2, N1, and N2 are all positive integers.

The processor 710 is further configured to process the second channel information into channel feature information.

The radio frequency unit 701 is configured to report the channel feature information.

In embodiments of this application, a terminal can expand first channel information into second channel information, so that even for first channel information of different lengths, the terminal may expand the first channel information into second channel information of a fixed length, to enable the length of the second channel information to match a length of the input of an AI model. In this way, the AI model that matches channel information of different lengths does not need to be trained for the channel information of different lengths, and a terminal or a network side device may only need to train an AI model that matches the length of the second channel information, thereby effectively saving storage and training overheads of the terminal and/or the network side device for the AI model.

An embodiment of this application further provides a network side device, including a processor and a communication interface. The communication interface is configured to receive channel feature information reported by a terminal. The processor is configured to process the channel feature information into second channel information and process the second channel information into first channel information. The first channel information includes M1 sub-bands or N1 ports corresponding to each sub-band, and the second channel information includes M2 sub-bands or N2 ports corresponding to each sub-band, where M1 ≤ M2, N1 ≤ N2, and M1, M2, N1, and N2 are all positive integers. The network side device embodiment corresponds to the foregoing method embodiment of the network side device. The implementation processes and implementations of the foregoing method embodiment are all applicable to the embodiment of the network side device, and can achieve the same technical effect.

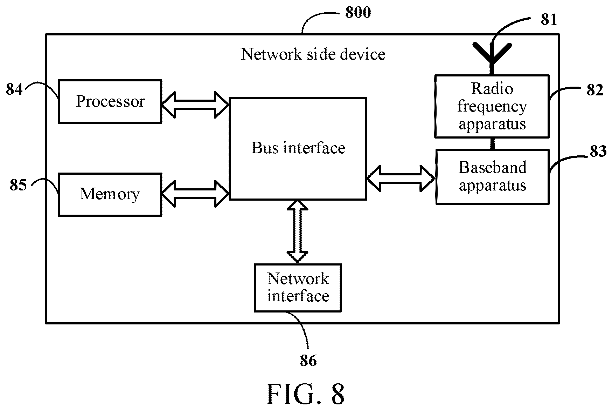

Specifically, an embodiment of this application further provides a network side device. As shown in FIG. 8, the network side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-sent information and sends the processed to-be-sent information to the radio frequency apparatus 82. The radio frequency apparatus 82 processes the received information and then sends the processed received information through the antenna 81.

The method performed by the network side device in the foregoing embodiment may be implemented in the baseband apparatus 83. The baseband apparatus 83 includes a baseband processor.

The baseband apparatus 83 may include, for example, at least one baseband board. A plurality of chips are arranged on the baseband board, as shown in FIG. 8. One of the chips is for example a baseband processor, and is connected to the memory 85 through a bus interface to invoke a program in the memory 85 and perform the operations of the network device shown in the foregoing method embodiment.

The network side device may further include a network interface 86. The interface is for example a common public radio interface (common public radio interface, CPRI).

Specifically, the network side device 800 in this embodiment of this application further includes an instruction or a program stored in the memory 85 and executable on the processor 84. The processor 84 invokes the instruction or the program in the memory 85 to perform the method performed by each module shown in FIG. 5, and achieves the same technical effect. To avoid repetition, details are not described herein.

An embodiment of this application further provides a readable storage medium. The readable storage medium stores a program or an instruction. The program or instruction, when executed by a processor, implements each process of the method embodiment shown in FIG. 2, or implements each process of the method embodiment shown in FIG. 3, and can achieve the same technical effect. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an instruction to implement each process of the method embodiment shown in FIG. 2, or to implement each process of the method embodiment shown in FIG. 3, and can achieve the same technical effect. To avoid repetition, details are not described herein again.

It should be understood that the chip mentioned in this embodiment of this application may further be referred to as a system level chip, a system chip, a chip system, a system on chip, or the like.

An embodiment of this application further provides a computer program product. The computer program product is stored in a storage medium. The computer program product is executed by at least one processor to implement each process of the method embodiment in FIG. 2, or to implement each process of the method embodiment in FIG. 3, and can achieve the same technical effect. To avoid repetition, details are not described herein again.

An embodiment of this application further provides a communication system, including a terminal and a network side device. The terminal may be configured to perform the steps of the method in FIG. 2, and the network side device may be configured to perform the steps of the method in FIG. 3.

It should be noted that in this specification, terms "include", "comprise", or any other variants thereof are intended to encompass non-exclusive inclusion, so that a process, a method, an article, or an apparatus including a series of elements not only includes those elements, but also includes another element not listed explicitly, or includes elements inherent to the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions involved. For example, the described method may be performed in an order different from the described order, and various steps may further be added, omitted, or combined. Moreover, features described with reference to some examples may be combined in another example.

Through the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solution of this application, in essence, or a part contributing to the prior art may be embodied in a form of a computer software product. The computer software product is stored in a storage medium (such as a ROM/RAM, a magnetic disk, or an optical disk), including several instructions for causing a terminal (such as a mobile phone, a computer, a server, an air conditioner, or a network device) to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms without departing from the concept of this application and the protection scope of the claims. These forms fall within the protection of this application.

## Claims

1. An information processing method, comprising:
expanding, by a terminal, first channel information into second channel information, wherein the first channel information comprises M1 sub-bands or N1 ports corresponding to each sub-band, the second channel information comprises M2 sub-bands or N2 ports corresponding to each sub-band, M1 ≤ M2, N1 ≤ N2, and M1, M2, N1, and N2 are all positive integers; and
processing, by the terminal, the second channel information into channel feature information, and reporting the channel feature information.

2. The method according to claim 1, wherein the second channel information is any one of the following:
a precoding matrix;
a channel matrix;
a preprocessed precoding matrix; and
a preprocessed channel matrix.

3. The method according to claim 1, wherein when the first channel information comprises M1 sub-bands and N1 ports corresponding to each sub-band, the expanding, by a terminal, first channel information into second channel information comprises:
obtaining, by the terminal, M1 sub-bands and N1 ports corresponding to each sub-band, and determining M2 sub-bands and N2 ports corresponding to each sub-band;
determining, by the terminal, a to-be-expanded sub-band location based on the M1 sub-bands and the M2 sub-bands, and determining a to-be-expanded port location based on the N1 ports and the N2 ports; and
adding, by the terminal, a target element at each of the to-be-expanded sub-band location and the to-be-expanded port location, to obtain the second channel information of the M2 sub-bands and the N2 ports corresponding to each sub-band.

4. The method according to claim 3, wherein the target element comprises at least one of the following:
a specific element; and
an element calculated based on an existing element, wherein the existing element is an element on each of the M1 sub-bands or the N1 ports.

5. The method according to claim 3, wherein the to-be-expanded port location is a port location determined based on polarization, or a port location selected by the terminal.

6. The method according to claim 3, wherein the to-be-expanded sub-band location is a sub-band location determined based on a subcarrier spacing SCS and a quantity of physical resource blocks PRBs of each sub-band, or a sub-band location selected by the terminal.

7. The method according to claim 3, further comprising:
reporting, by the terminal, first location information, wherein the first location information comprises at least one of information about the to-be-expanded sub-band location and information about the to-be-expanded port location.

8. The method according to claim 7, wherein the reporting, by the terminal, first location information comprises any one of the following:
reporting, by the terminal, at least one of a first bitmap and a second bitmap, wherein the first bitmap is used for indicating the to-be-expanded sub-band location, and the second bitmap is used for indicating the to-be-expanded port location; and
reporting, by the terminal, a third bitmap, wherein the third bitmap is a two-dimensional bitmap, and the third bitmap is used for indicating at least one of the to-be-expanded sub-band location and the to-be-expanded port location.

9. The method according to claim 8, wherein when the terminal reports the second bitmap, the second bitmap is used for indicating a location of a target port, and the target port is a port of a same polarization direction among to-be-expanded ports.

10. The method according to claim 3, wherein before the expanding, by a terminal, first channel information into second channel information, the method further comprises:
receiving, by the terminal, first indication information sent by a network side device, wherein the first indication information is used for indicating at least one of the to-be-expanded sub-band location and the to-be-expanded port location.

11. The method according to claim 10, wherein the receiving, by the terminal, first indication information sent by a network side device comprises:
receiving, by the terminal, a channel state information CSI report configuration sent by the network side device, wherein the CSI report configuration comprises the first indication information.

12. The method according to claim 10, wherein the first indication information is further used for indicating at least one of the following:
a bitmap, used for indicating at least one of the to-be-expanded sub-band location and the to-be-expanded port location;
an index, associated with at least one of the to-be-expanded sub-band location and the to-be-expanded port location; and
a target parameter, used for indicating at least one of the to-be-expanded sub-band location and the to-be-expanded port location.

13. The method according to claim 12, wherein an association relationship between the index and at least one of the to-be-expanded sub-band location and the to-be-expanded port location is specified in a protocol.

14. The method according to claim 12, wherein an association relationship between the index and at least one of the to-be-expanded sub-band location and the to-be-expanded port location corresponds to an AI unit.

15. The method according to claim 14, wherein the association relationship is transmitted together with the corresponding AI unit.

16. The method according to claim 10, wherein when the first indication information is used for indicating one of the to-be-expanded sub-band location and the to-be-expanded port location, the terminal reports the other of the to-be-expanded sub-band location and the to-be-expanded port location.

17. The method according to claim 1, wherein the expanding, by a terminal, first channel information into second channel information comprises at least one of the following:
determining, by the terminal based on a protocol agreement, a to-be-expanded port location for each polarization direction of the N1 ports according to the polarization direction, and adding a target element at the to-be-expanded port location to expand the N1 ports into the N2 ports; and
determining, by the terminal, to-be-expanded sub-band locations respectively before and after the M1 sub-bands based on the protocol agreement, and adding the target element at each of the to-be-expanded sub-band locations to expand the M1 sub-bands into the M2 sub-bands.

18. The method according to claim 1, wherein the second channel information is a plurality of coefficients, or the second channel information comprises a real part and an imaginary part.

19. An information processing method, comprising:
receiving, by a network side device, channel feature information reported by a terminal; and
processing, by the network side device, the channel feature information into second channel information, and processing the second channel information into first channel information,
wherein the first channel information comprises M1 sub-bands or N1 ports corresponding to each sub-band, the second channel information comprises M2 sub-bands or N2 ports corresponding to each sub-band, M1 ≤ M2, N1 ≤ N2, and M1, M2, N1, and N2 are all positive integers.

20. The method according to claim 19, wherein the second channel information is any one of the following:
a precoding matrix;
a channel matrix;
a preprocessed precoding matrix; and
a preprocessed channel matrix.

21. The method according to claim 19, further comprising:
receiving, by the network side device, first location information reported by the terminal, wherein the first location information comprises at least one of information about the to-be-expanded sub-band location and information about the to-be-expanded port location,
wherein the information about the to-be-expanded sub-band location is used for indicating the to-be-expanded sub-band location determined by the terminal based on the M1 sub-bands and the M2 sub-bands, and the information about the to-be-expanded port location is used for indicating the to-be-expanded port location determined by the terminal based on the N1 ports and the N2 ports.

22. The method according to claim 21, wherein the receiving, by the network side device, first location information reported by the terminal comprises any one of the following:
receiving, by the network side device, at least one of a first bitmap and a second bitmap reported by the terminal, wherein the first bitmap is used for indicating the to-be-expanded sub-band location, and the second bitmap is used for indicating the to-be-expanded port location; and
receiving, by the network side device, a third bitmap reported by the terminal, wherein the third bitmap is a two-dimensional bitmap, and the third bitmap is used for indicating at least one of the to-be-expanded sub-band location and the to-be-expanded port location.

23. The method according to claim 22, wherein when the terminal reports the second bitmap, the second bitmap is used for indicating a location of a target port, and the target port is a port of a same polarization direction among to-be-expanded ports.

24. The method according to claim 21, further comprising:
sending, by the network side device, first indication information to the terminal, wherein the first indication information is used for indicating at least one of the to-be-expanded sub-band location and the to-be-expanded port location.

25. The method according to claim 24, wherein the sending, by the network side device, first indication information to the terminal comprises:
sending, by the network side device, a CSI report configuration to the terminal, wherein the CSI report configuration comprises the first indication information.

26. The method according to claim 24, wherein the first indication information is further used for indicating at least one of the following:
a bitmap, used for indicating at least one of the to-be-expanded sub-band location and the to-be-expanded port location;
an index, associated with at least one of the to-be-expanded sub-band location and the to-be-expanded port location; and
a target parameter, used for indicating at least one of the to-be-expanded sub-band location and the to-be-expanded port location.

27. The method according to claim 19, wherein the second channel information is a plurality of coefficients, or the second channel information comprises a real part and an imaginary part.

28. An information processing apparatus, comprising:
an expansion module, configured to expand first channel information into second channel information, wherein the first channel information comprises M1 sub-bands or N1 ports corresponding to each sub-band, the second channel information comprises M2 sub-bands or N2 ports corresponding to each sub-band, M1 ≤ M2, N1 ≤ N2, and M1, M2, N1, and N2 are all positive integers; and
a reporting module, configured to process the second channel information into channel feature information, and report the channel feature information.

29. An information processing apparatus, comprising:
a receiving module, configured to receive channel feature information reported by a terminal; and
a processing module, configured to process the channel feature information into second channel information, and process the second channel information into first channel information,
wherein the first channel information comprises M1 sub-bands or N1 ports corresponding to each sub-band, the second channel information comprises M2 sub-bands or N2 ports corresponding to each sub-band, M1 ≤ M2, N1 ≤ N2, and M1, M2, N1, and N2 are all positive integers.

30. A terminal, comprising a processor and a memory, wherein the memory stores a program or an instruction executable in the processor, and the program or the instruction, when executed by the processor, implements the steps of the information processing method according to any one of claims 1 to 18.

31. A network side device, comprising a processor and a memory, wherein the memory stores a program or an instruction executable in the processor, and the program or the instruction, when executed by the processor, implements the steps of the information processing method according to any one of claims 19 to 27.

32. A readable storage medium, storing a program or an instruction, wherein the program or the instruction, when executed by a processor, implements the steps of the information processing method according to any one of claims 1 to 18, or implements the steps of the information processing method according to any one of claims 19 to 27.
